(19) Europäisches Patentamt / European Patent Office / Office européen des brevets

(11) **EP 2 496 921 B1**

(12) **FASCICULE DE BREVET EUROPEEN**

(45) Date de publication et mention de la délivrance du brevet:
**21.10.2020 Bulletin 2020/43**

(21) Numéro de dépôt: **10773089.7**

(22) Date de dépôt: **03.11.2010**

(51) Int Cl.:
***G01M 13/04*** *(2019.01)*

(86) Numéro de dépôt international:
**PCT/EP2010/066737**

(87) Numéro de publication internationale:
**WO 2011/054867 (12.05.2011 Gazette 2011/19)**

(54) **PROCÉDÉ DE DÉTECTION D'UN ENDOMMAGEMENT D'AU MOINS UN ROULEMENT DE PALIER D'UN MOTEUR**

VERFAHREN ZUR FESTSTELLUNG VON SCHÄDEN AN MINDESTENS EINEM MOTORROLLENLAGER

METHOD FOR DETECTING DAMAGE IN AT LEAST ONE ENGINE ROLLER BEARING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2009 FR 0957801**

(43) Date de publication de la demande:
**12.09.2012 Bulletin 2012/37**

(73) Titulaire: **Safran Aircraft Engines**
**75015 Paris (FR)**

(72) Inventeur: **GRIFFATON, Julien**
**75001 Paris (FR)**

(74) Mandataire: **Gevers & Orès**
**9 rue St Antoine du T**
**31000 Toulouse (FR)**

(56) Documents cités:
**WO-A1-02/089305      WO-A1-2004/109250**
**FR-A1- 2 913 769      US-A- 6 116 089**
**US-A1- 2003 106 375      US-A1- 2007 095 142**
**US-B1- 6 408 696**

**Description**

L'invention concerne le domaine de la surveillance des usures du moteur, en particulier, l'usure des roulements de palier supportant en rotation au moins un arbre rotatif du moteur.

Un palier de roulements dans une turbomachine aéronautique supporte les arbres des corps haute pression et basse pression de la turbomachine. On distingue les paliers de roulements classiques supportant un arbre par rapport au carter fixe de la turbomachine des paliers de roulements supportant un premier arbre par rapport à un deuxième arbre connus sous la désignation « palier inter-arbres ».

La rupture des roulements de palier est susceptible de stopper la rotation de l'arbre supporté par le palier ce qui peut entraîner l'arrêt total du moteur et ainsi potentiellement mettre en danger la vie des passagers d'un aéronef sur lequel serait monté la turbomachine. Suite à la rupture du palier, les débris de ce dernier pénètrent entre les différents éléments de la turbomachine et celle-ci doit être remplacée dans son ensemble. En détectant l'usure des paliers, on peut remplacer un palier endommagé avant sa rupture ce qui permet d'augmenter la durée de vie de la turbomachine.

Pour détecter l'usure des roulements de palier, on connaît des méthodes simples dans lesquelles on mesure un signal vibratoire d'une machine à turbine à gaz pour calculer l'énergie vibratoire du signal par une méthode statistique (méthode des moments statistiques dite méthode RMS consistant à calculer la racine carrée de la moyenne des carrés, etc.). Ensuite, on compare l'énergie vibratoire du signal à un seuil de détection déterminé de manière empirique. Si l'énergie du signal excède le seuil de détection, une usure des roulements de palier est détectée. Une telle méthode n'est adaptée que pour des turbomachines utilisées dans un milieu peu ou non bruité, par exemple pour les turbines de production d'énergie électrique.

Une turbomachine aéronautique est utilisée dans un milieu fortement bruité (bruit de combustion, bruit provoqué par l'écoulement aérodynamique, nombreuses harmoniques des régimes de rotation des arbres haute et basse pression, bruit lié aux balourds, etc.). Une méthode, telle que décrite précédemment, n'est par conséquent pas adaptée.

Pour une turbomachine aéronautique, on dispose actuellement d'une base de données de défauts regroupant l'ensemble des endommagements des roulements des paliers d'un moteur. Cette base comprend de préférence les défauts de tous les roulements de tous les paliers du moteur.

A titre d'exemple, la base de données de défauts comprend les fréquences caractéristiques pour une bague intérieure défectueuse et une bague extérieure défectueuse d'un roulement d'un palier inter-arbre. En effet, s'il existe un défaut à la surface d'une bague extérieure d'un roulement, ce défaut va générer un choc à chaque qu'un élément roulant va rencontrer le défaut. Ainsi, chaque défaut peut être caractérisé par une fréquence théorique ou une pluralité de fréquences théoriques qui sont regroupées sous forme de pointeurs de défauts, eux-mêmes regroupés dans la base de données de défauts.

La fréquence résultant de l'endommagement du roulement est proportionnelle à la vitesse de rotation de l'arbre ou des arbres supportés par le palier, la fréquence se propageant par vibrations aux travers des composants de la turbomachine. Une méthode de détection adaptée pour le domaine aéronautique consiste à réaliser une recherche de niveaux vibratoires des composants de la turbomachine à haut régime de fonctionnement de celle-ci. Pour ce faire, ce procédé prévoit d'acquérir au cours d'un cycle complet de vol un signal vibratoire issu d'un ou plusieurs capteurs de vibration qui peuvent détecter des vibrations en provenance des composants de la turbomachine. La détection d'un endommagement d'un roulement du palier est alors réalisée à partir de l'identification de niveaux vibratoires supérieurs à un seuil prédéfini pour un roulement sain et pour lesquels on a identifié un même facteur. On pourra par exemple se référer à la demande de brevet européen EP 1 111 364 qui décrit un mode de réalisation d'un tel procédé.

Cependant, des essais avec des roulements endommagés de paliers ont montré que la détection d'un endommagement n'est pas systématique avec une telle méthode. En effet, les mesures des capteurs de vibration sont polluées à haut régime de fonctionnement de la turbomachine par l'environnement vibratoire naturel ce qui rend difficilement discernables les niveaux vibratoires caractéristiques d'un endommagement.

On connaît par ailleurs par la demande de brevet FR 2913769 A1 de SNECMA un procédé de détection dans lequel un signal vibratoire est mesuré pendant une activité renouvelable à bas régime du moteur. Ce procédé permet de détecter un défaut pour un unique roulement. Par ailleurs, l'ensemble des méthodes de l'art antérieur se limitent à détecter les défauts pour un unique type de roulement de palier pour un régime stabilisé déterminé (bas ou haut régime). Cependant, certains des défauts n'apparaissent qu'à haut ou bas régime.

La demanderesse souhaite proposer une méthode universelle pouvant détecter les défauts de l'ensemble des paliers, la méthode de détection devant être de mise en œuvre rapide afin de réaliser un diagnostic en temps réel. En outre, la demanderesse a recherché à augmenter la précision de la détection de manière à pouvoir déterminer de manière fiable et reproductible si au moins un roulement de palier est défectueux.

A cet effet, l'invention concerne, un procédé selon la revendication 1.

L'invention est ici présentée pour une période de mesure pendant laquelle le régime de l'arbre varie entre un bas régime et un haut régime mais il va de soi que l'invention s'applique aussi entre un régime inférieur et un régime supérieur, l'important étant que le régime du moteur soit variable entre deux valeurs du régime déterminées. De préférence, le régime supérieur est un haut régime et le régime inférieur est un bas régime.

Grâce à l'invention, on peut mesurer un grand nombre d'endommagements sur une plage large du régime de l'arbre, certains endommagements n'apparaissant qu'à certains régimes. Autrement dit, le procédé de l'invention permet de détecter tout type d'endommagements et ce pour l'ensemble des paliers du moteur. Une détection précise est possible par la combinaison d'une mesure à régime variable, d'une synchronisation du signal vibratoire et de la comparaison à une signature vibratoire saine de référence.

Le taux d'écart mesuré est ainsi caractéristique des perturbations liées aux endommagements des roulements du fait que la signature vibratoire saine est très pertinente. Par comparaison à un taux d'écart fixé par des seuils, il n'est pas nécessaire de tenir compte des dispersions des seuils en fonction des moteurs étant donné que la base pour la comparaison, c'est-à-dire la signature saine de référence, a été formée pour le moteur sur lequel on réalise la détection d'endommagements. La détection est réalisée sur mesure pour le moteur ce qui est un gage de précision de la détection.

De préférence encore, la signature vibratoire saine du moteur a été préalablement validée par comparaison à une signature familiale étalon définie pour la famille dudit moteur.

Cette validation préliminaire permet avantageusement d'éviter l'utilisation d'une signature défectueuse comme référence pour le calcul du taux d'écart.

De préférence toujours, on forme une signature familiale étalon à partir de signatures saines de référence de moteurs de la même famille. Cela permet avantageusement de lisser les différences entre une même famille de moteurs, la majorité des moteurs étant des moteurs sains.

De manière préférée, on forme un ensemble des signatures saines de référence pour une pluralité de moteurs d'une même famille,

- on calcule un taux de discordance familiale pour chaque signature saine de référence en mesurant l'écart statistique entre ladite signature saine de référence et les autres signatures saines de référence de l'ensemble,
- on élimine de l'ensemble les signatures saines de référence celles ayant un taux de discordance supérieur à un seuil de discordance déterminé, et
- on forme la signature familiale étalon à partir de signatures vibratoires de référence restantes.

Grâce aux étapes ci-dessus, on élimine les « moutons noirs » de l'ensemble des signatures de référence de manière à garder uniquement les signatures de référence dont la probabilité d'être saine est élevée.

De préférence, on calcule un taux de discordance familiale pour chaque signature saine de référence en mesurant l'écart statistique entre ladite signature saine de référence et une signature familiale provisoire formée à partir des autres signatures saines de référence de l'ensemble.

Selon l'invention, le procédé comprend en outre une étape consistant à éliminer le bruit du spectrogramme en fonction des modes structuraux du moteur, l'élimination du bruit étant réalisée avant de calculer la moyenne des amplitudes des raies spectrales.

Cette étape de « débruitage » permet avantageusement d'obtenir une signature vibratoire courante pertinente dénuée de perturbations.

De préférence, on synchronise le signal vibratoire échantillonné par rapport aux variations du régime de l'arbre sur la période de mesure en échantillonnant de nouveau le signal échantillonné à fréquence constante en un signal échantillonné à fréquence proportionnelle au régime de l'arbre.

De préférence encore, on synchronise le signal vibratoire échantillonné par rapport aux variations du régime de l'arbre sur la période de mesure en calculant une courbe de parcours angulaire de l'arbre dans le domaine des ordres et en projetant le signal vibratoire courant sur ladite courbe de parcours angulaire pour obtenir un signal vibratoire courant synchronisé.

Selon un aspect de l'invention, la signature vibratoire saine de référence est une signature familiale étalon définie pour la famille dudit moteur. Par comparaison à une signature de référence propre au moteur, la signature familiale peut être facilement obtenue et est plus facilement exploitable.

En effet, une unique signature de référence familiale peut être utilisée pour un grand nombre de moteurs d'une même famille tandis que la signature de référence du moteur, c'est-à-dire une signature de référence individuelle, ne peut être utilisée que pour un seul moteur. Afin de suivre l'usure d'une pluralité de moteurs au cours du temps, il est nécessaire de gérer une base de données regroupant les signatures individuelles desdits moteurs. La signature de référence familiale permet de s'affranchir de cet inconvénient.

De préférence, on forme la signature familiale étalon à partir de signatures saines de référence de moteurs de la même famille. De manière similaire, toutes les étapes de formation de la signature familiale étalon citées précédemment s'appliquent pour une comparaison d'une signature courante du moteur à une signature de référence familiale.

L'invention sera mieux comprise à l'aide du dessin annexé sur lequel :

- la figure 1 représente un diagramme des différentes étapes du procédé selon l'invention pour un moteur test ;

- la figure 2 représente l'étape de définition de la période de mesure d'un signal vibratoire de composants du moteur dans laquelle :

  ◦ la courbe 2a représente une mesure du régime de l'arbre au cours du temps ;
  ◦ la courbe 2b représente une mesure de l'accélération de l'arbre au cours du temps ;
  ◦ la courbe 2c représente le signal vibratoire courant du moteur test Vc mesuré par un accéléromètre entre des instants t1 et t2 définis par rapport aux courbes 2a et 2b ;

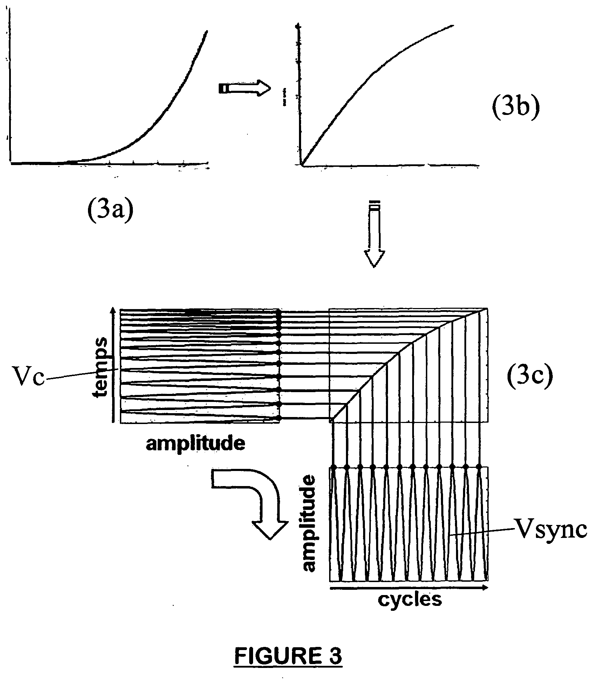

- la figure 3 représente un exemple de synchronisation d'un signal vibratoire dans laquelle :

  ◦ la courbe 3a représente l'accélération de l'arbre sur la période de mesure P ;
  ◦ la courbe 3b représente le temps de parcours angulaire de l'arbre en fonction du nombre de tours de l'arbre ;
  ◦ la courbe 3c représente la projection d'un signal vibratoire courant Vc sur la courbe 3b afin d'obtenir un signal vibratoire courant synchronisé Vsync;

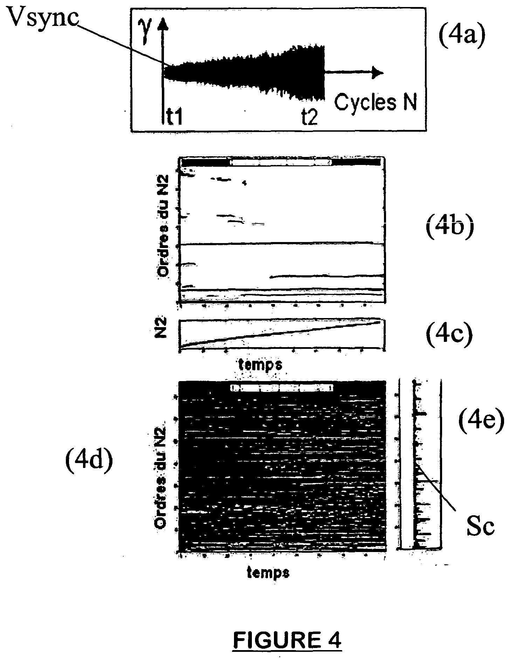

- la figure 4 représente l'étape de formation de la signature courante du moteur Sc dans laquelle :

  ◦ la courbe 4a représente le signal vibratoire courant synchronisé du moteur test Vsync ;
  ◦ le schéma 4b représente un spectrogramme d'ordre du signal vibratoire courant synchronisé du moteur test Vsync ;
  ◦ le schéma 4c représente l'accélération du régime de rotation de l'arbre sur la période de mesure P ;
  ◦ le schéma 4d représente le spectrogramme d'ordre du schéma 4b après élimination du bruit ;
  ◦ la courbe 4e représente la signature courante Sc calculée à partir du spectrogramme débruité 4d ;

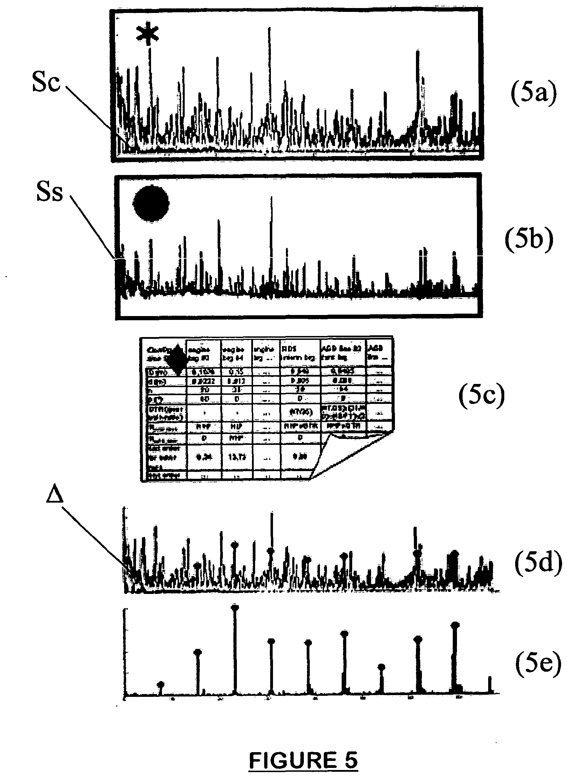

- la figure 5 représente les étapes de calcul du taux d'écart dans laquelle :

  ◦ la courbe 5a représente la signature vibratoire courante du moteur test Sc ;
  ◦ la courbe 5b représente la signature vibratoire saine du moteur test Ss ;
  ◦ le tableau 5c représente un extrait de la base de données de défauts des roulements du moteur ;
  ◦ la courbe 5d représente le taux d'écart entre la signature vibratoire saine Ss du moteur test de la courbe 5b et sa signature courante Sc de la courbe 5a ;
  ◦ la courbe 5e représente le taux de reconnaissance entre le taux d'écart calculé de la courbe 5d et les défauts répertoriés dans le tableau 5c ;

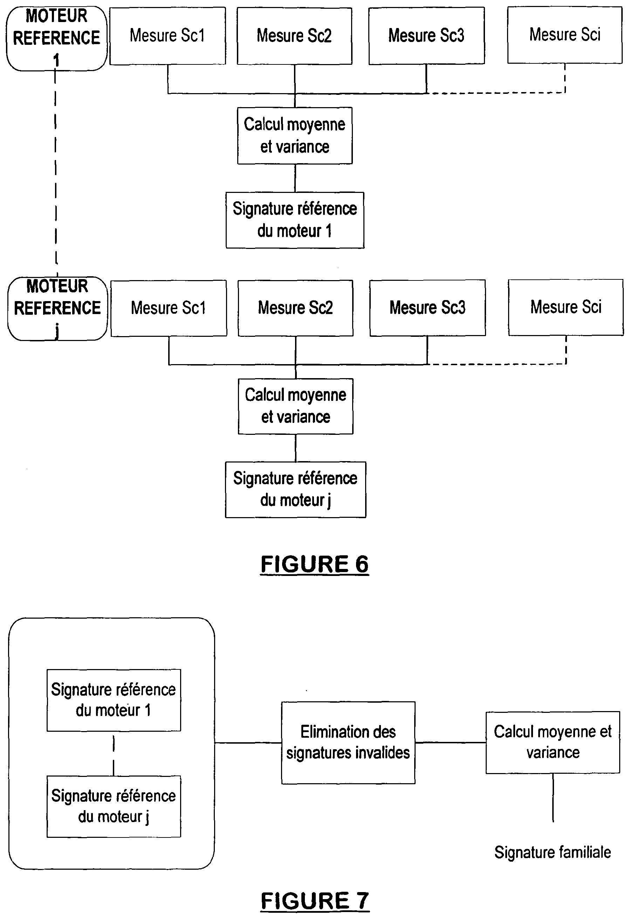

- la figure 6 représente l'étape de formation des signatures de référence de moteurs d'une même famille à partir des signatures courantes desdits moteurs ;
- la figure 7 représente l'étape de formation de la signature familiale étalon Sfam à partir d'une pluralité de signatures de moteur de référence Sref ;

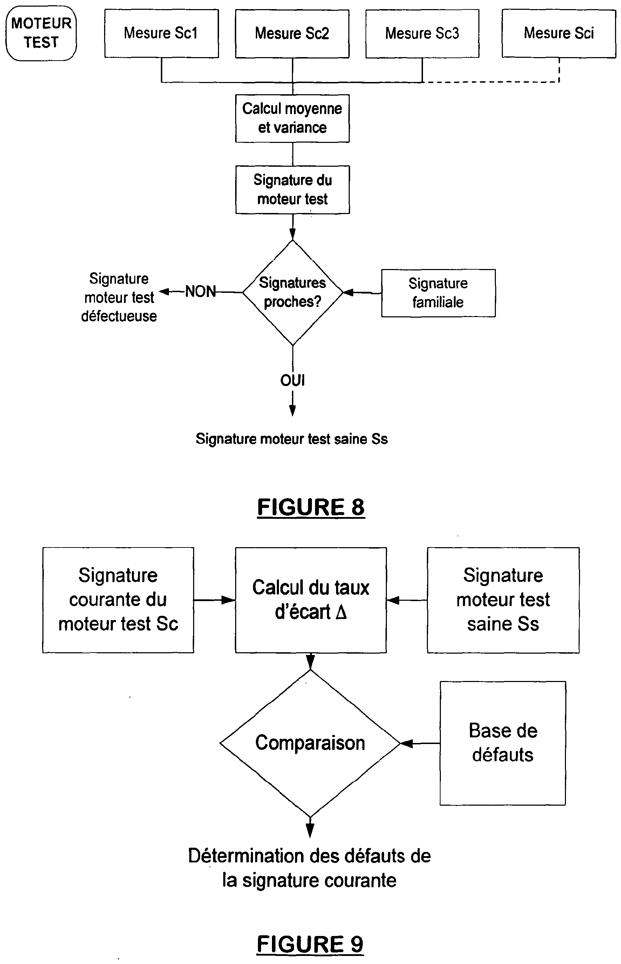

- la figure 8 représente l'étape de validation de la signature du moteur test ; et
- la figure 9 représente l'étape de comparaison de la signature courante du moteur test Sc à la signature saine du moteur Ss afin de déterminer les défauts des roulements de palier du moteur.

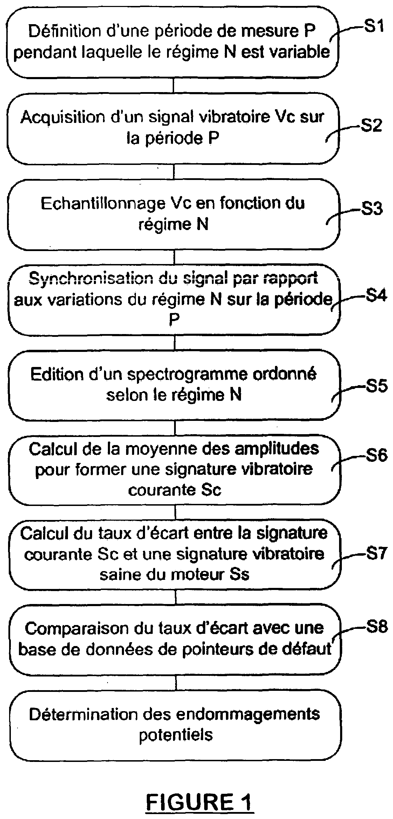

On se réfère à la figure 1 qui montre les étapes constitutives d'un procédé conforme à l'invention.
De manière générale, l'invention s'applique à tout type de moteur qui possède au moins un arbre rotatif et au moins un palier à roulements. Parmi ces moteurs, on peut citer par exemple les moteurs à turbine à gaz d'avion (appelés turbomachines) ou d'hélicoptère, les turbines à gaz terrestres, les boîtiers d'engrenages, les moteurs à essieux, etc.
Le principe sur lequel se base l'invention est que la fréquence résultant de l'endommagement du roulement est proportionnelle à la vitesse de rotation de l'arbre rotatif supporté par le palier. L'hypothèse est que cette fréquence va se transmettre à un capteur d'accélération au travers de composants du moteur eux-mêmes vibrants, en particulier aux fréquences fondamentales. La présente invention vise à mesurer un signal vibratoire global comprenant les défauts d'une pluralité de roulements. Afin de mettre en exergue ces défauts, le signal est mesuré pendant une variation du régime du moteur, c'est-à-dire pendant une variation des régimes de rotation des arbres.

(S1) Définition de la période de mesure P

Une première étape (S1) du procédé conforme à l'invention consiste à définir une période de mesure P pendant laquelle le régime de l'arbre N est variable. A titre d'exemple, le régime de l'arbre N varie entre un fonctionnement à bas régime et un fonctionnement à haut régime. Etant donné que le régime N varie fortement, les signaux de vibration mesurés sont de natures très différentes, un même endommagement d'un roulement ayant une contribution vibratoire différente en fonction du régime du moteur.

Une telle détermination de la période de mesure P va à l'encontre des pratiques courantes de l'homme du métier qui favorisait un fonctionnement en régime stabilisé du moteur, c'est-à-dire à régime constant, afin de pouvoir obtenir des variations de même nature et ainsi pouvoir les comparer et les identifier. La demanderesse a choisi un tout autre chemin en privilégiant l'hétérogénéité des vibrations mesurées afin de pouvoir détecter un grand nombre d'endommagements qui surviennent lorsque le moteur fonctionne en régime variable.

Par ailleurs, la demanderesse a choisi de considérer aussi bien le fonctionnement en bas régime que le fonctionnement en haut régime alors que les méthodes de l'art antérieur se focalisaient uniquement sur une plage de régime étroite. Les méthodes selon l'art antérieur nécessitaient de réaliser des mesures distinctes pour chaque régime ce qui conduisait à des erreurs d'interprétation et une détection imprécise des endommagements lorsque l'on comparait les résultats à bas et à haut régime.

En choisissant une telle période de mesure P, la demanderesse a vaincu ainsi un préjugé relatif à la nécessité d'une analyse à fonctionnement stabilisé ainsi qu'un préjugé relatif à la nécessité d'une analyse à un régime donné.

La période de mesure P est déterminée ainsi en fonction du ou des régimes de rotations de l'arbre au cours du temps. Par la suite, il est considéré le cas de la détection d'un endommagement d'un roulement à rouleaux d'un palier inter-arbres supportant en rotation un arbre rotatif du corps basse-pression par rapport à un arbre rotatif du corps haute-pression de la turbomachine et comportant une bague extérieure reliée à l'arbre haute-pression et une bague intérieure reliée à l'arbre basse-pression. Dans le cas d'une turbomachine, la présente invention pourrait également s'appliquer à la détection de l'endommagement d'un roulement à billes ou à rouleaux d'un palier supportant en rotation un seul arbre rotatif par rapport à un élément fixe du moteur.

Pour la suite de la description, on définit par N1 et N2 les régimes temporels de rotation respectivement de l'arbre basse-pression et de l'arbre haute-pression de la turbomachine qui sont supportés par le palier. La détermination de la période de mesure P consiste dans un premier temps à calculer les régimes de rotation des différents composants à partir, par exemple, de sondes tachymètriques disposées dans le moteur.

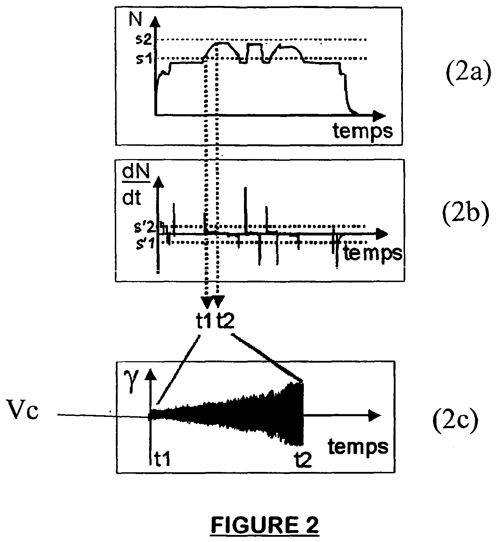

Le régime de rotation permet de sélectionner des périodes de mesure pour des plages de fonctionnement adéquates et reproductibles d'un vol à un autre ce qui permet de réaliser des mesures comparables pour chaque vol. Pour permettre de détecter si la plage de fonctionnement est adéquate, les dérivées temporelles du régime de rotation sont calculées comme représenté sur la figure 2b.

De manière encore préférée, la période de mesure P doit avoir une durée minimale afin de permettre de réaliser les étapes ultérieures du procédé, par exemple, une transformée de Fourier. Par ailleurs, on prévoit une période maximale afin de limiter les espaces de stockage lors de la mise en œuvre des étapes de traitement ultérieures.

Dans cette forme de réalisation, la période de mesure P est déterminée en imposant:

- un seuil minimal, correspondant au régime inférieur, et un seuil maximal, correspondant au régime supérieur, sur le régime de rotation de chaque arbre (N1, N2), le seuil minimal étant, dans cet exemple, égal à 20% du régime maximal de l'arbre et le seuil maximal correspondant au régime maximal admissible par la machine;

- un seuil minimal et un seuil maximal sur les dérivées des régimes de rotation de chaque arbre (N1, N2) ; le seuil minimal étant, dans cet exemple, égal à 10% du régime maximal admissible par minute, le seuil maximal étant égal par exemple à 200% du régime maximal par minute.

- une période minimale (ici 10 secondes) pour laquelle les conditions précédentes sont remplies et une période maximale d'analyse (ici 100 secondes).

Dans cette mise en oeuvre de l'invention, en référence à la figure 2, un signal vibratoire courant Vc est mesuré au cours d'une accélération du régime des arbres du moteur du ralenti (bas régime) au plein-gaz (haut régime).

Il a été précédemment décrit une logique classique avec des seuils et des durées déterminés mais il va de soi qu'une logique floue pourrait également convenir. Une logique floue permet de définir des périodes de mesures P acceptables quand bien même toutes les conditions ne sont pas rigoureusement remplies, ce qui réduit le caractère limitatif des seuils fixes, et augmente le nombre de périodes de mesure P potentielles pour réaliser la détection d'endommagements.

(S2) Acquisition d'un signal vibratoire

L'étape suivante (S2) consiste à acquérir sur l'ensemble de la période de mesure P un signal vibratoire courant Vc de composants du moteur. Un tel signal provient d'un capteur de vibration (par exemple un accéléromètre ou une jauge de contrainte) préalablement placé sur un composant fixe du moteur.

(S3) Echantillonnage d'un signal vibratoire

Le signal vibratoire courant Vc est ensuite échantillonné en fonction du régime de rotation N de l'arbre pendant la période de mesure P au cours d'une étape S3. Dans ce mode de réalisation, le signal vibratoire courant Vc est échantillonné à une fréquence de l'ordre de quelques kilohertz.

(S4) Synchronisation du signal vibratoire

Le signal vibratoire courant Vc est ensuite traité de façon appropriée pour le diagnostic d'endommagement de roulement. Pour ce faire, une première étape consiste à ré-échantillonner le signal vibratoire courant Vc en fonction des variations du régime de rotation N de l'arbre. Ces variations du régime N de l'arbre supporté par le roulement correspondent à l'évolution de la vitesse de rotation relative du roulement, Autrement dit, on synchronise le signal vibratoire Vc par rapport à la variation de vitesse relative du roulement.

Dans le cas d'un roulement dont la bague extérieure est fixe, rattachée à un élément fixe du moteur, et dont la bague intérieure supporte un arbre, la vitesse relative du roulement correspond au régime de rotation de l'arbre supporté par le roulement. Dans le cas d'un palier inter-arbre co-rotatif, la vitesse relative est la différence entre les régimes de rotation des deux arbres. Pour un palier inter-arbre contra-rotatif, la vitesse relative est la somme des régimes de rotation des deux arbres.

Afin de mieux comprendre le principe de la synchronisation d'un signal vibratoire Vc, l'étape de synchronisation est appliquée à un signal vibratoire courant Vc de forme simple comme représenté sur la figure 3c.

En référence à la figure 3c, un signal vibratoire courant Vc est mesuré sur une période de mesure P pendant laquelle la vitesse relative du roulement, c'est-à-dire le régime N, augmente au cours du temps, le régime de l'arbre N auquel est relié le roulement étant croissant comme représenté sur la figure 3a, le signal vibratoire courant Vc ayant une fréquence de plus en plus élevée au cours du temps comme représenté sur la figure 3c.

Ainsi, si l'on souhaite mesurer des amplitudes de variation sur le signal vibratoire courant Vc au cours du temps avec une résolution constante, le signal vibratoire courant Vc est facilement analysable au début de la période de mesure P du fait que les sinusoïdes sont espacées, tandis que la résolution n'est pas suffisante en fin de période de mesure P lorsque les sinusoïde sont proches les unes des autres, la résolution pour l'analyse n'étant pas suffisante. On dit alors que le signal vibratoire courant Vc est compressé en fin de période de mesure P.

Ce phénomène n'était pas présent dans l'art antérieur étant donné que les mesures étaient réalisées à un régime stabilisé sans variation du régime du moteur. Le choix de la demanderesse de réaliser une détection à régime variable va l'encontre des méthodes de l'art antérieur. En effet, choisir une période de mesure en régime variable signifie pour l'homme du métier de renoncer aux méthodes de traitement traditionnelles qui ne sont adaptées que pour les signaux stationnaires.

Pour éliminer cet inconvénient, on synchronise le signal vibratoire courant Vc par rapport à la vitesse relative du roulement, par rapport au régime de rotation du moteur. En référence à la courbe 3b de la figure 3, on détermine le temps nécessaire pour accomplir une rotation du roulement, la courbe 3b étant désignée courbe de parcours angulaire. Une rotation du roulement correspond à une rotation de la bague intérieure dans le référentiel fixe de la bague extérieure. La courbe 3b peut être facilement obtenue par intégration de la fonction de la courbe 3a représentant la vitesse relative du roulement par rapport au temps. Cette synchronisation se présente sous la forme d'une modulation glissante permettant de répartir le signal courant sur la période de mesure P.

En référence à la figure 3c, il suffit ensuite de projeter le signal vibratoire courant Vc sur la courbe de parcours angulaire 3b pour obtenir un signal vibratoire courant synchronisé Vsync dont les sinusoïdes sont régulièrement espacées ce qui montre que les différentes fréquences du signal vibratoire courant Vc ne sont plus corrélées. Pour la projection, on réalise un nouvel échantillonnage du signal en prélevant des points régulièrement espacés sur la courbe de parcours angulaire 3b.

La figure 3 représente un exemple de synchronisation d'un signal vibratoire courant Vc qui peut être transposé sans difficulté pour l'homme du métier à un signal vibratoire plus complexe avec une évolution du régime de rotation N moins linéaire.

La synchronisation d'un signal vibratoire courant Vc, mesuré en partie à bas régime et en partie à haut régime, en fonction de la vitesse relative d'un roulement permet de faciliter les étapes ultérieures de traitement comme cela sera détaillé par la suite.

Plus simplement, par l'opération de synchronisation en fonction du régime de rotation N, on a transformé un signal échantillonné à fréquence constante en un signal échantillonné à fréquence proportionnelle au régime.

(S5) Edition d'un spectrogramme

L'étape suivante (S5) consiste à transformer le signal vibratoire échantillonné et synchronisé Vsync en un signal fréquentiel pour obtenir des raies spectrales fréquentielles ordonnées selon le régime de rotation N de l'arbre, ce qui correspond à éditer un spectrogramme ordonné selon N. Un tel type de spectrogramme des ordres est connu de l'homme du métier.

A titre de remarque, du fait de la synchronisation du signal vibratoire courant Vc, on obtient un spectrogramme tel que dans l'art antérieur dans lequel le signal vibratoire courant Vc était obtenu à régime stabilisé.

La synchronisation préliminaire du signal vibratoire comme détaillé à l'étape (S4) permet de former un spectrogramme comportant des lignes horizontales comme représenté sur la courbe 4b de la figure 4. Le signal ayant été synchronisé par rapport au régime de rotation de l'arbre représenté sur la courbe 4c, chaque raie spectrale correspond à une fréquence de rotation du signal vibratoire synchronisé. Au sens mathématique, les fréquences de rotation du signal vibratoire synchronisé Vsync se décomposent dans la base mathématique des ordres.

Ainsi, le spectrogramme comprend des raies horizontales dont l'amplitude varie au cours de la période de mesure P, l'amplitude d'une raie étant représentée par un niveau de gris comme représenté sur la courbe 4b de la figure 4.

Le spectrogramme de la figure 4b est un spectrogramme des densités spectrales de puissance, connu de l'homme du métier sous sa désignation anglaise « PSD » pour « Power Spectral Density », les principaux paramètres du calcul de ce spectrogramme étant le nombre de points pour la transformée de Fourier rapide (FFT) et le recouvrement de la fenêtre glissante pour la FFT, ces paramètres étant connus de l'homme du métier.

Il va de soi que d'autres types de spectrogrammes pourraient également être obtenus, l'important étant qu'ils soient ordonnés selon le régime N de l'arbre afin d'obtenir des raies spectrales horizontales, c'est-à-dire d'ordre constant.

De manière préférée, on réalise une étape de nettoyage du bruit du spectrogramme d'ordre afin d'obtenir un spectrogramme comprenant uniquement des raies spectrales pertinentes pour la détection d'endommagement des roulements.

Après édition du spectrogramme d'ordres, ce dernier comprend essentiellement trois types d'information :

- de fines raies horizontales, caractéristiques de l'activité liée au régime de rotation (par exemple, dans le cas d'un moteur d'avion : balourds, engrenages, passages d'aubes, roulements), ces raies horizontales correspondant à l'information pertinente ;

- des raies obliques, caractéristiques d'une activité liée aux régimes de rotation d'autres rotors mécaniquement indépendants, cette composante étant particulièrement importante lorsque le régime de rotation évolue entre un bas régime et un haut régime de fonctionnement. L'obliquité des raies est liée à la synchronisation du signal vibratoire par rapport au régime de rotation de l'arbre;

- des aplats énergétiques correspondant aux modes des structures du moteur, un mode structural correspondant, par exemple, à la résonnance naturelle d'une structure, d'un carter, de la turbomachine sur ses suspensions.

Les deux derniers types d'informations correspondent à des bruits devant être éliminés. L'étape présente vise à l'élimination des aplats énergétiques (troisième type d'informations). A cet effet, l'algorithme d'élimination de bruit comprend des étapes consistant à :

- parcourir chaque ligne verticale du spectrogramme (le long des fréquences) avec une fenêtre glissante de taille prédéterminée ;

- identifier les modes structuraux en calculant, pour chaque fenêtre glissante, la valeur moyenne ou un pourcentile des amplitudes présentes dans la fenêtre glissante ;

- déterminer la valeur des pics d'amplitude en soustrayant les modes structuraux à la ligne verticale du spectrogramme ;

- calculer le rapport (valeur des pics d'amplitude / modes structuraux) pour constituer une nouvelle ligne du spectrogramme d'ordres dénuée de bruit ; et

- passer à la ligne verticale suivante

En référence au spectrogramme 4d de la figure 4, on obtient un nouveau spectrogramme d'ordres dénué de bruits liés aux aplats d'énergie ; on dit que le spectrogramme d'ordres 4d est débruité.

### (S6) Formation de la signature vibratoire courante

La moyenne temporelle des amplitudes des raies spectrales est alors calculée (étape S6). Cette étape consiste à :

- parcourir chaque ligne horizontale du spectrogramme d'ordres, le spectrogramme ayant été de préférence préalablement débruité;

- calculer la moyenne des amplitudes le long de l'axe du temps.

La courbe 4e de la figure 4 représente la moyenne des amplitudes des raies spectrales en fonction des ordres du régime de rotation ; cette moyenne des amplitudes correspond à la signature vibratoire courante du moteur Sc. Elle comprend toutes les amplitudes caractéristiques des fréquences du moteur dans le domaine des ordres.

La moyenne temporelle telle que réalisée dans la présente invention est très avantageuse compte tenu de l'étape préliminaire de synchronisation (S4) qui a étalé obliquement sur les spectrogrammes le bruit des régimes liés aux autres roulements. Comme le bruit des régimes est oblique, le calcul de la moyenne des amplitudes selon la direction horizontale permet de lisser le bruit des régimes. Ce dernier possède ainsi une amplitude faible et constante dans la signature vibratoire courante Sc. De la sorte, tout ce qui n'est pas ordonné est atténué par l'effet de moyenne, ce qui permet de mettre en évidence l'apparition de phénomènes ordonnés, par exemple un défaut de roulement inter-arbres.

### (S7) Détermination des endommagements

On calcule un taux d'écart entre la signature vibratoire courante du moteur Sc, précédemment calculée, et une signature vibratoire saine du moteur préétablie Ss qui comprend toutes les amplitudes caractéristiques des fréquences du moteur sain dans le domaine des ordres. La formation de la signature vibratoire saine Ss du moteur va être maintenant détaillée.

### - Formation d'une signature vibratoire saine Ss du moteur

Une signature vibratoire saine Ss du moteur est une signature propre à chaque moteur sain. Cette signature vibratoire saine du moteur comprend une pluralité de paramètres de référence, pour chaque capteur vibratoire (ou acoustique), pour chaque mode opératoire (plages de fonctionnement), et pour chaque domaine (domaine des fréquences, domaine des ordres d'un régime, etc.).

Un paramètre de référence de la signature vibratoire saine Ss est constitué des éléments suivants : une valeur moyenne et un écart-type, ou une valeur médiane et un écart interquartile. Ces valeurs sont évaluées à partir de l'acquisition et de l'analyse des premiers vols dudit moteur, c'est-à-dire à partir des premières signatures courantes du moteur. En effet, le moteur est supposé être dénué de défauts au cours de ses premiers vols. La signature saine d'un moteur Ss est utilisée comme référence pour la mise en œuvre du procédé de détection pour ledit moteur.

La signature vibratoire saine Ss du moteur correspond à la mesure de tous les paramètres pertinents pour la détection d'un endommagement d'un roulement qui ont été mesurés sur le moteur sain. Comme la signature vibratoire saine Ss est utilisée comme référence pour déterminer le taux d'écart, il est important que cette signature vibratoire saine Ss corresponde effectivement à un moteur sain et non à un moteur endommagé. Si tel était le cas, des roulements sains seraient considérés comme endommagés et réciproquement. A cet effet, on procède à une étape préliminaire de validation de la signature vibratoire saine Sd du moteur.

### - Validation de la signature vibratoire saine Ss du moteur

Pour valider la signature vibratoire saine Ss du moteur, on forme une signature familiale étalon Sfam qui est une référence du comportement sain d'une famille de moteurs. Cette signature familiale Sfam permet de valider, lors de la formation d'une signature vibratoire saine Ss du moteur (c'est-à-dire une signature propre à chaque moteur), que cette signature vibratoire saine Ss est représentative d'un moteur sain.

En référence à la figure 7, la signature familiale Sfam d'une famille de moteurs est calculée à partir des signatures vibratoires individuelles d'une pluralité de moteurs d'une même famille, désignées signatures de référence Sref d'un moteur. La signature familiale Sfam est évaluée en faisant la moyenne des signatures de référence Sref des moteurs de la famille (moyenne des moyennes et moyenne des variances).

Chaque signature de référence Sref d'un moteur est évaluée en faisant la moyenne des signatures individuelles courantes dudit moteur (moyenne des moyennes et moyenne des variances) comme représenté sur la figure 6. La méthode de formation de la signature individuelle courante pour un moteur de référence correspond aux étapes S1 à S6 précédentes réalisées lors des premiers vols dudit moteur de référence.

En référence à la figure 7, pour former la signature familiale Sfam à partir des signatures de référence Sref, on s'assure que les signatures de référence Sref sont toutes représentatives d'un comportement sain des moteurs, par exemple en éliminant des signatures de référence Sref extrêmes par la méthodes des pourcentiles, ou en appliquant une méthode de type « tous sauf un », connu de l'homme du métier sous sa désignation anglaise « leave-one-out cross validation » dans laquelle pour chaque signature de référence Sref d'un moteur, on calcule un taux de discordance de la signature de référence Sref par rapport à une signature familiale temporaire Y formée à partir de toutes les autres signatures de référence Sref des autres moteurs.

Ensuite, on vérifie que le taux de discordance familiale de la signature de référence Sref n'est pas supérieur à seuil de discordance prédéterminé. Autrement dit, on vérifie que la signature de référence du moteur n'est pas trop éloignée (en termes d'écart statistique) de la signature familiale temporaire. En cas de dépassement du seuil de discordance pour une signature de référence Sref, cette dernière est considérée comme invalide.

On itère cette méthode pour toutes les signatures de référence Sref et on élimine de l'ensemble des signatures de référence Sref celles qui sont invalides. Les signatures individuelles de référence restantes sont moyennées pour obtenir la signature familiale Sfam de la famille de moteurs.

La signature familiale Sfam obtenue, on forme pour tout nouveau moteur une signature vibratoire saine Ss à partir d'une pluralité de signatures vibratoires courantes du moteur au cours de ses premiers vols. En effet, c'est lors de ses premiers vols que les roulements du moteur sont susceptibles d'être sains. Pour valider la signature vibratoire saine Ss de ce moteur, il suffit de vérifier que la signature vibratoire saine Ss de ce moteur n'est pas trop éloignée de la signature familiale Sfam en termes d'écart statistique. De préférence, on calcule un nouveau taux de discordance pour ladite signature saine par rapport à la signature familiale Sfam.

Si la comparaison de la signature vibratoire saine Ss du moteur à la signature familiale Sfam révèle un écart significatif, le comportement du moteur analysé est jugé atypique : une analyse plus détaillée doit permettre d'identifier l'origine de cette anomalie. Dans tous les cas, la signature vibratoire saine Ss du moteur non validée est rejetée. Si la signature saine Ss est validée pour le moteur, elle sert de référence pour la méthode d'endommagement du moteur.

- Calcul du taux d'écart $\Delta$

En référence à la figure 5, on calcule un taux d'écart $\Delta$ (courbe 5d) entre la signature vibratoire courante Sc du moteur (courbe 5a), précédemment calculée, et une signature vibratoire saine Ss du moteur (courbe 5b), préalablement validée.

De préférence, le taux d'écart $\Delta$ est calculé régulièrement (par exemple une fois par vol) de manière à suivre l'évolution de l'endommagement de chacun des roulements du moteur.

La comparaison de la signature vibratoire courante Sc avec la signature vibratoire saine peut être réalisée de diverses manières Ss.

Si la signature vibratoire saine Ss n'est constituée que de quelques vols, typiquement moins d'une dizaine, la variance n'est pas correcte en chaque point du domaine des ordres, il est alors judicieux de calculer le un taux d'écart alpha $\Delta\alpha$ ci-dessous dont n correspond à un nombre d'écarts-types en dessous duquel on ne veut pas faire apparaître d'écart significatif, Sc correspond à la valeur de la signature vibratoire courante et Ss correspond à la valeur de la signature vibratoire saine.

$$\Delta\alpha = \text{maximum}(0,\ Sc - (Ss + n \times \text{variance}^{1/2}))$$

Une alternative, lorsque que la signature vibratoire saine Ss est suffisamment « riche », typiquement plus d'une dizaine de vols, consiste à calculer, pour chaque point du domaine des ordres, un taux d'écart bêta $\Delta\beta$ connu de l'homme du métier sous la désignation « z-score » ci-dessous.

$$\Delta\beta = (Sc-Ss)/(\text{variance})^{1/2}$$

Autrement dit, suite à la comparaison, on obtient un taux d'écart $\Delta$ (alpha ou bêta) entre la signature vibratoire courante Sc et la signature vibratoire saine Ss qui permet de caractériser l'amplitude des ordres des endommagements, les ordres liés au fonctionnement intrinsèque du moteur ayant été soustraits ou lissés par le calcul du taux d'écart. Autrement dit, le taux d'écart $\Delta$ représente la perturbation détectée dans la signature vibratoire courante Sc.

Le taux d'écart $\Delta$ selon l'invention est particulièrement pertinent du fait qu'il tient compte de la signature saine Ss du moteur sur lequel on réalise la détection d'endommagement. En outre, la signature saine Ss est calculée sur mesure pour ledit moteur, le taux d'écart calculé étant alors plus pertinent qu'un écart obtenu uniquement à partir de seuils comme réalisé dans l'art antérieur.

De manière alternative, on compare la signature vibratoire courante du moteur Sc, précédemment calculée, directement à la signature familiale Sfam décrite précédemment, sans calculer de signature saine Ss du moteur. La signature familiale Sfam peut avantageusement être utilisée sur un grand nombre de moteurs ce qui accélère la détection d'usures pour l'ensemble desdits moteurs, la signature saine Ss du moteur ne devant pas être recherchée dans une base de données de signatures saines Ss.

## (S8) Identification des endommagements

On dispose d'une base de données de pointeurs de défauts répertoriant les endommagements théoriques des roulements de palier du moteur. Cette base est exprimée dans le domaine des ordres.

On peut dès lors quantifier la présence d'un endommagement de roulement, et identifier ce roulement, en balayant, roulement par roulement, composant de roulement par composant de roulement, les pointeurs de défauts construits à partir des fréquences caractéristiques de ce roulement (composant par composant).

En effet, les fréquences caractéristiques d'endommagement d'un roulement sont des fonctions qui dépendent de la géométrie du roulement, du nombre d'éléments roulants et de la vitesse de rotation des arbres. Les multiples de la fréquence caractéristique d'un roulement endommagé peuvent être des multiples entiers. Ainsi, un endommagement d'un roulement peut être représenté par un peigne de fréquences ($f_{car}$, $f_{2car}$, $f_{3car}$, $f_{4car....}$ $F_{ncar}$) qui est stocké dans la base de données par un pointeur de défauts (représenté partiellement par le tableau 5c).

De manière classique, on calcule un rapport R entre chaque pic d'amplitude du peigne et l'amplitude associée du taux d'écart $\Delta$ préalablement calculé comme représenté sur al figure 5e. Ce rapport R est comparé à au moins un seuil d'endommagement prédéterminé afin de déterminer si le roulement est endommagé.

A cet effet, le niveau d'amplitude pour un roulement sain est défini à partir d'une moyenne estimée avec différents moteurs sains et différentes acquisitions lors d'essais. Quant aux seuils d'endommagement, ils sont définis à partir d'essais avec le roulement endommagé ou à partir de l'expérience avec des roulements endommagés similaires à celui pour lequel les seuils doivent être définis.

Selon une disposition avantageuse de l'invention, le rapport R entre un pic d'amplitude et le niveau d'amplitude défini pour un roulement sain est d'abord comparé à un seuil bas d'endommagement. Bien entendu, on pourrait envisager de comparer le rapport R à un nombre de seuils d'endommagement supérieur à deux afin d'affiner d'avantage le degré d'endommagement du roulement.

## Revendications

**1.** Procédé de détection d'un endommagement d'une pluralité de paliers à roulements supportant en rotation au moins un arbre rotatif d'un moteur, **caractérisé par le fait qu'**il comprend les étapes consistant à :

a) définir (S1) une période de mesure P pendant laquelle le régime N de l'arbre varie entre un bas régime et un haut régime qui est supérieur au bas régime, lesdits bas régime et haut régime appartenant à un large éventail de vitesses s'étendant jusqu'à la vitesse maximale du moteur;

b) acquérir (S2) sur l'ensemble de la période de mesure P un signal vibratoire courant (Vc) d'une vibration mécanique de composants du moteur;

c) échantillonner (S3) le signal vibratoire courant (Vc) pendant la période de mesure P;

d) synchroniser (S4) le signal vibratoire échantillonné par rapport aux variations du régime de l'arbre N sur la période de mesure P ;

e) transformer (S5) le signal vibratoire échantillonné et synchronisé (Vsync) en un signal fréquentiel pour obtenir un spectrogramme de raies spectrales fréquentielles ordonnées selon le régime de rotation de l'arbre N, et en éliminer le bruit en fonction des modes structuraux du moteur afin d'obtenir un spectrogramme comprenant uniquement des raies spectrales pertinentes pour la détection d'endommagement des paliers à roulements;

f) calculer (S6) la moyenne temporelle des amplitudes des raies spectrales du spectrogramme débruité afin d'obtenir une signature vibratoire courante du moteur (Sc) ;

g) calculer (S7) une courbe de taux d'écart ($\Delta$) entre la signature vibratoire courante (Sc) du moteur et une signature vibratoire saine de référence dudit moteur, ladite signature vibratoire saine de référence étant une signature vibratoire de référence (Ss) dudit moteur formée en calculant une moyenne de signatures vibratoires courantes du moteur mesurées sur une période déterminée de la vie dudit moteur corespondant aux premiers vols dudit moteur; et

h) comparer (S8) la courbe de taux d'écart ($\Delta$) à des pointeurs de défauts d'une base de données préétablie, répertoriant les endommagements théoriques des paliers de roulements du moteur de manière à déterminer les endommagements potentiels desdits paliers à roulements.

2. Procédé selon la revendication 1, dans lequel la signature vibratoire saine (Ss) du moteur a été préalablement validée par comparaison à une signature familiale étalon (Sfam) définie pour la famille dudit moteur.

3. Procédé selon la revendication 2, dans lequel on forme une signature familiale étalon (Sfam) à partir de signatures saines de référence (Sref) de moteurs de la même famille.

4. Procédé selon la revendication 3, dans lequel :

- on forme un ensemble des signatures saines de référence (Sref) pour une pluralité de moteurs d'une même famille,
- on calcule un taux de discordance familiale pour chaque signature saine de référence (Sref) en mesurant l'écart statistique entre ladite signature saine de référence (Sref) et les autres signatures saines de référence (Sref) de l'ensemble,
- on élimine de l'ensemble les signatures saines de référence (Sref) celles ayant un taux de discordance supérieur à un seuil de discordance déterminé, et
- on forme la signature familiale étalon (Sfam) à partir de signatures vibratoires de référence (Sref) restantes.

5. Procédé selon la revendication 4, dans lequel :

- on calcule un taux de discordance familiale pour chaque signature saine de référence (Sref) en mesurant l'écart statistique entre ladite signature saine de référence (Sref) et une signature familiale provisoire formée à partir des autres signatures saines de référence (Sref) de l'ensemble.

6. Procédé selon l'une des revendications 1 à 5, dans lequel on synchronise le signal vibratoire échantillonné par rapport aux variations du régime de l'arbre N sur la période de mesure P en échantillonnant de nouveau le signal échantillonné à fréquence constante en un signal échantillonné à fréquence proportionnelle au régime de l'arbre N.

7. Procédé selon l'une des revendications 1 et 6, dans lequel on synchronise le signal vibratoire échantillonné par rapport aux variations du régime de l'arbre N sur la période de mesure P en calculant une courbe de parcours angulaire de l'arbre dans le domaine des ordres et en projetant le signal vibratoire courant (Vc) sur ladite courbe de parcours angulaire pour obtenir un signal vibratoire courant synchronisé (Vsync).

**Patentansprüche**

1. Verfahren zur Feststellung eines Schadens an einer Vielzahl von Rollenlagern, die mindestens eine drehbare Welle eines Motors drehend tragen, **dadurch gekennzeichnet, dass** es die Schritte umfasst, die bestehen aus:

a) Definieren (S1) eines Messzeitraums P, währenddessen die Drehzahl N der Welle zwischen einer niedrigen Drehzahl und einer hohen Drehzahl, die höher ist als die niedrige Drehzahl, variiert, wobei die niedrige Drehzahl und die hohe Drehzahl einem breiten Spektrum von Geschwindigkeiten, das sich bis zur Höchstgeschwindigkeit des Motors erstreckt, angehören;
b) Erfassen (S2), über den gesamten Messzeitraum P, eines üblichen Schwingungssignals (Vc) einer mechanischen Schwingung von Motorbestandteilen ;
c) Abtasten (S3) des üblichen Schwingungssignals (Vc) während des Messzeitraums P;
d) Synchronisieren (S4) des abgetasteten Schwingungssignals in Bezug auf die Variationen der Drehzahl der Welle N über den Messzeitraum P;
e) Umwandeln (S5) des abgetasteten und synchronisierten Schwingungssignals (Vsync) in ein Frequenzsignal, um ein Spektrogramm von Frequenzspektrallinien zu erhalten, die gemäß der Rotationsdrehzahl der Welle N geordnet sind, und Eliminieren des Rauschens daraus in Abhängigkeit von den Strukturmodi des Motors, um ein Spektrogramm zu erhalten, das nur für die Schadensfeststellung der Rollenlager relevante Spektrallinien umfasst;
f) Berechnen (S6) des zeitlichen Durchschnitts der Amplituden der Spektrallinien des rauschbereinigten Spektrogramms, um eine übliche Schwingungssignatur des Motors (Sc) zu erhalten;
g) Berechnen (S7) einer Abweichungsratenkurve (Δ) zwischen der üblichen Schwingungssignatur (Sc) des Motors und einer intakten Referenzschwingungssignatur des Motors, wobei die intakte Referenzschwingungssignatur eine Referenzschwingungssignatur (Ss) des Motors ist, die gebildet wird, indem ein Durchschnitt von üblichen Schwingungssignaturen des Motors berechnet wird, die über einen bestimmten Lebenszeitraum des Motors gemessen werden, der den ersten Flügen des Motors entspricht; und

h) Vergleichen (S8) der Abweichungsratenkurve (Δ) mit Fehleranzeigern einer vorher festgelegten Datenbank, die die theoretischen Schäden der Rollenlager des Motors verzeichnet, sodass die potenziellen Schäden der Rollenlager bestimmt werden.

2. Verfahren nach Anspruch 1, wobei die intakte Schwingungssignatur (Ss) des Motors vorab durch Vergleich mit einer für die Motorfamilie definierte Eichmaß-Familiensignatur (Sfam) abgenommen wurde.

3. Verfahren nach Anspruch 2, wobei eine Eichmaß-Familiensignatur (Sfam) ausgehend von intakten Referenzsignaturen (Sref) von Motoren derselben Familie gebildet wird.

4. Verfahren nach Anspruch 3, wobei:

- eine Gesamtheit der intakten Referenzsignaturen (Sref) für eine Vielzahl von Motoren einer selben Familie gebildet wird,
- eine Familien-Diskordanzrate für jede intakte Referenzsignatur (Sref) berechnet wird, indem die statistische Abweichung zwischen der intakten Referenzsignatur (Sref) und den anderen intakten Referenzsignaturen (Sref) der Gesamtheit gemessen wird,
- aus der Gesamtheit der intakten Referenzsignaturen (Sref) diejenigen eliminiert werden, die eine Diskordanzrate aufweisen, die höher ist als eine bestimmte Diskordanzschwelle, und
- die Eichmaß-Familiensignatur (Sfam) ausgehend von verbleibenden Referenzschwingungssignaturen (Sref) gebildet wird.

5. Verfahren nach Anspruch 4, wobei

- eine Familien-Diskordanzrate für jede intakte Referenzsignatur (Sref) berechnet wird, indem die statistische Abweichung zwischen der intakten Referenzsignatur (Sref) und einer vorläufigen Familiensignatur gemessen wird, die ausgehend von den anderen intakten Referenzsignaturen (Sref) der Gesamtheit gebildet wird.

6. Verfahren nach einem der Ansprüche 1 bis 5, wobei das abgetastete Schwingungssignal in Bezug auf die Variationen der Drehzahl der Welle N über den Messzeitraum P synchronisiert wird, indem das bei konstanter Frequenz abgetastete Signal erneut in ein abgetastetes Signal bei einer zur Drehzahl der Welle N proportionalen Frequenz abgetastet wird.

7. Verfahren nach einem der Ansprüche 1 und 6, wobei das abgetastete Schwingungssignal in Bezug auf die Variationen der Drehzahl der Welle N über den Messzeitraum P synchronisiert wird, indem eine Kurve einer Winkelstrecke der Welle im Bereich der Ordnungen berechnet wird und indem das übliche Schwingungssignal (Vc) auf die Kurve der Winkelstrecke projiziert wird, um ein synchronisiertes übliches Schwingungssignal (Vsync) zu erhalten.

**Claims**

1. Method for detecting damage to a plurality of roller bearings providing rotational support to at least one rotating shaft of an engine, **characterised in that** it comprises the following steps:

a) defining (S1) a measurement period P during which the shaft speed N varies between a low speed and a high speed higher than the low speed, said low speed and high speed lying within a wide range of speeds varying up to the maximum engine speed;
b) acquiring (S2) a current vibration signal (Vc) of a mechanical vibration of engine components, over the entire measurement period P;
c) capturing (S3) the current vibration signal (Vc) during the measurement period P;
d) synchronising (S4) the captured vibration signal relative to speed variations of the shaft N over the measurement period P;
e) transforming (S5) the captured and synchronised vibration signal (Vsync) into a frequency signal to obtain a spectrogram of frequency spectral lines ordered according to the rotation speed of the shaft N, and eliminating noise therefrom as a function of structural modes of the engine so as to obtain a spectrogram comprising only spectral lines that are relevant for detection of damage to the roller bearings;

f) calculating (S6) the temporal mean of amplitudes of the spectral lines of the cleaned spectrogram to obtain a current engine vibration signature (Sc);

g) calculating (S7) a deviation ratio curve ($\Delta$) between the current vibration signature (Sc) of the engine and a reference healthy vibration signature of said engine, said reference healthy vibration signature being a reference vibration signature (Ss) of said engine formed by calculating a mean of current vibration signals of the engine measured over a determined period of the life of said engine corresponding to the first flights of said engine; and

h) comparing (S8) the deviation ratio curve ($\Delta$) with defect indicators in a pre-established database, listing theoretical damage to engine roller bearings so as to determine potential damage to said roller bearings.

2. Method according to claim 1, wherein the healthy vibration signature (Ss) of the engine has been previously validated by comparison with a standard family signature (Sfam) defined for the family of said engine.

3. Method according to claim 2, wherein a standard family signature (Sfam) is formed from healthy reference signatures (Sref) of engines of the same family.

4. Method according to claim 3, wherein:

 - a set of healthy reference signatures (Sref) is formed for a plurality of engines of the same family,
 - a family mismatch ratio is calculated for each healthy reference signature (Sref) by measuring the statistical difference between said healthy reference signature (Sref) and the other healthy reference signatures (Sref) in the set,
 - signatures with a mismatch ratio greater than a determined mismatch threshold are eliminated from the set of healthy reference signatures (Sref), and
 - a standard family signature (Sfam) is formed from the remaining reference vibration signatures (Sref).

5. Method according to claim 4, wherein:

 - a family mismatch ratio is calculated for each healthy reference signature (Sref) by measuring the statistical difference between said healthy reference signature (Sref) and a provisional family signature formed from the other healthy reference signatures (Sref) in the set.

6. Method according to any of claims 1 to 5, wherein the captured vibration signal is synchronised relative to variations in the shaft speed N over the measurement period P by capturing the captured signal again at constant frequency as a signal captured at a frequency proportional to the shaft speed N.

7. Method according to one of claims 1 and 6, wherein the captured vibration signal is synchronised relative to variations in the shaft speed N over the measurement period P by calculating an angular path curve of the shaft in the field of orders and projecting the current vibration signal (Vc) on said angular path curve to obtain a current synchronised vibration signal (Vsync).

Définition d'une période de mesure P pendant laquelle le régime N est variable ⟩—S1

Acquisition d'un signal vibratoire Vc sur la période P ⟩—S2

Echantillonnage Vc en fonction du régime N ⟩—S3

Synchronisation du signal par rapport aux variations du régime N sur la période P ⟩—S4

Edition d'un spectrogramme ordonné selon le régime N ⟩—S5

Calcul de la moyenne des amplitudes pour former une signature vibratoire courante Sc ⟩—S6

Calcul du taux d'écart entre la signature courante Sc et une signature vibratoire saine du moteur Ss ⟩—S7

Comparaison du taux d'écart avec une base de données de pointeurs de défaut ⟩—S8

Détermination des endommagements potentiels

## FIGURE 1

**FIGURE 2**

**FIGURE 3**

FIGURE 4

FIGURE 5

EP 2 496 921 B1

**FIGURE 6**

**FIGURE 7**

MOTEUR TEST | Mesure Sc1 | Mesure Sc2 | Mesure Sc3 | Mesure Sci

Calcul moyenne et variance

Signature du moteur test

Signatures proches?

Signature moteur test défectueuse ← NON

Signature familiale

OUI

Signature moteur test saine Ss

## FIGURE 8

Signature courante du moteur test Sc → Calcul du taux d'écart Δ ← Signature moteur test saine Ss

Comparaison ← Base de défauts

Détermination des défauts de la signature courante

## FIGURE 9

**EP 2 496 921 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

<br>

- EP 1111364 A

- FR 2913769 A1